# NEUE EUROPÄISCHE PATENTSCHRIFT

(11) **EP 1 999 388 B2**
(45) Veröffentlichungstag und Bekanntmachung des Hinweises auf die Entscheidung über den Einspruch: **24.06.2015**
(45) Hinweis auf die Patenterteilung: 24.02.2010
(21) Anmeldenummer: 07723566.1
(22) Anmeldetag: 24.03.2007
(51) Int. Cl.: F16C 25/08, F16C 27/06, F16H 57/02

(54) **GETRIEBE MIT AUSGLEICHSSCHEIBE**
GEARBOX WITH SHIM
BOÎTE DE VITESSES À RONDELLE DE COMPENSATION

(30) Priorität: 29.03.2006 DE 102006014790
(43) Veröffentlichungstag der Anmeldung: 10.12.2008
(73) Patentinhaber: Getrag Ford Transmissions GmbH, 50735 Köln (DE)
(72) Erfinder: KÜCK, Rainer, 50735 Köln (DE); VOIGT, Torsten, 50859 Köln-widdersdorf (DE)
(74) Vertreter: Albiger, Jonas
(86) Internationale Anmeldenummer: PCT/EP2007/002619
(87) Internationale Veröffentlichungsnummer: WO 2007/112871

(56) Entgegenhaltungen:
- EP-A1- 0 103 044
- EP-A1- 0 406 431
- DE-A1- 2 020 203
- DE-A1- 2 032 111
- DE-A1- 3 810 448
- DE-A1- 3 843 687
- DE-A1- 4 000 042
- DE-A1- 19 517 955
- DE-C- 849 047
- DE-U1- 8 901 778
- US-A- 1 650 852
- US-A- 2 467 416
- US-A- 2 859 033
- US-A- 4 212 095
- US-A- 4 699 528
- US-A1- 2006 018 582
- US-A1- 2006 098 909
- US-B1- 6 223 574
- US-B1- 6 497 027
- US-B1- 6 618 924
- W. BEITZ ET AL.: 'Taschenbuch für den Maschinenbau / Dubbel', Bd. 20, 2001, SPRINGER-VERLAG, BERLIN HEIDELBERG - NEW YORK Seite G 57
- H. GRÄFEN, PROF. DR. RER. NAT. DR.-ING.E.H.: 'Lexikon Werkstofftechnik Berichtigter Nachdruck', 1993, VDI VERLAG GMBH, DÜSSELDORF Seiten 182-184 - 973,309,295

## Beschreibung

Die Erfindung betrifft ein Getriebe mit einem Gehäuse, mit wenigstens einer drehbar in dem Gehäuse gelagerten Welle und mit wenigstens einer Ausgleichsscheibe, durch die ein axiales Spiel oder eine axiale Verspannung der Welle in dem Gehäuse eingestellt werden kann.

Beispielsweise ist in der WO 01/02749 ein KFZ-Schaltgetriebe offenbart, das zwei Eingangswellen und zwei Ausgangswellen umfasst. Eine Ausgangswelle ist dabei in dem Gehäuse des Schaltgetriebes durch zwei Kegelrollenlager drehbar gelagert. Damit die Kegelrollenlager sowohl in radialer als auch in axialer Richtung der Ausgangswelle optimal Kräfte aufnehmen können, sollte sich die Welle über Kegelrollenlager am Gehäuse in axialer Richtung möglichst spielfrei und gleichzeitig, um unnötige Reibung zu vermeiden, möglichst spannungsfrei abstützen.

Bei einem Schaltgetriebe, bei dem die Welle aus Stahl und das Gehäuse beispielsweise aus Aluminium ist, kann die Welle mit den darauf sitzenden Kegelrollenlagern gegenüber dem Gehäuse in einem kalten Zustand axial vorgespannt werden. Die Erwärmung des Getriebes auf Betriebstemperatur führt zu einem Vorspannungsverlust.

Es ist bekannt, zum Einstellen des axialen Spiels oder der axialen Vorspannung Ausgleichsscheiben zu verwenden, die in axialer Richtung beispielsweise zwischen Gehäuse und einem der beiden Kegelrollenlager gesetzt werden. In einer Serienfertigung werden dabei Ausgleichsscheiben mit unterschiedlicher Dicke vorgehalten, um so auf die gegebenen Fertigungstoleranzen zielgenau reagieren zu können, so dass sich bei den montierten Getrieben jeweils eine gleich große Vorspannung bzw. ein gleich großen axiales Spiel einstellt.

Derartige Ausgleichsscheiben werden aus einem Blech gestanzt und danach einem Schleifprozess unterzogen, um eine hohe Maßgenauigkeit hinsichtlich der Scheibendicke zu erzielen. Das Blechstanzen führt jedoch zu einem großen Materialabfall.

Die US 2,859,033, die den nächstliegenden Stand der Technik dargestellt, beschreibt eine Vorrichtung zum Einstellen einer axialen Vorspannung einer Welle in einem Getriebe, wobei die Vorrichtung einen torusförmigen Körper umfasst, in dessen Hohlraum eine Nicht-Newtonsche Flüssigkeit beinhaltet ist. Der Aufbau dieser Vorrichtung ist jedoch vergleichsweise aufwändig.

Der Erfindung liegt daher die Aufgabe zugrunde, ein Getriebe derart zu gestalten, dass das Einstellen eines axialen Spieles oder einer axialen Vorspannung der Welle in dem Getriebe einfach und preisgünstig ist.

Die der Erfindung zugrunde liegende Aufgabe wird durch die Ansprüche 1 und 8 gelöst. Bevorzugte Ausführungsbeispiele der Erfindung lassen sich aus den Unteransprüchen 2 bis 7 ableiten.

Gemäß Anspruch 1 zeichnet sich die Erfindung dadurch aus, dass die Ausgleichsscheibe ein zu einem Ring gebogener Draht ist. Das Biegen eines Drahtes zu einem Ring, durch den dann das axiale Spiel der Welle in dem Gehäuse eingestellt werden kann, führt praktisch zu keinem Materialabfall. Eine Dicke des Drahtes ist für das Maß der axialen Vorspannung oder des axialen Spiels entscheidend.

Der Ring kann vorzugsweise einen rechteckigen Ringquerschnitt aufweisen. Ein rechteckiger Ringquerschnitt stellt sich beim Biegen des Drahtes ein, wenn der Ringquerschnitt vor dem Biegen die Form eines Trapezes hat. Das Trapez weist dabei eine kürzere und eine längere Kante auf, die zueinander parallel sind und durch zwei schräg verlaufende Kanten verbunden werden. Durch das Rundbiegen gleichen sich die Längen der kürzeren Kante und der längeren Kante aufgrund der dann auf das Material wirkenden Druck- bzw. Zugkräfte aneinander an, so dass nach dem Rundbiegen sich ein rechteckiger oder im wesentlichen rechteckiger Ringquerschnitt einstellt.

In einem bevorzugten Ausführungsbeispiel weist der Ring einen nicht geschlossenen Umfang auf. Dies bedeutet, dass beim gebogenen Draht sich zwei Drahtenden gegenüberstehen, ohne dass sie miteinander verbunden sind. Nach dem Rundbiegen muss daher der Draht lediglich auf Länge geschnitten werden. Dies hält den Fertigungsaufwand niedrig, ohne dass dabei die Funktion der Ausgleichsscheibe, nämlich die Einstellung eines axialen Spieles oder einer axialen Vorspannung, beeinträchtigt wird.

Der Draht kann warm- oder kaltgewalzt sein. So lässt sich beispielsweise ein Draht mit rundem Querschnitt zu einem Draht mit einem trapezförmigen Querschnitt umformen. Beim Walzvorgang kann zudem der Draht gezogen werden, wodurch sich der Querschnitt entsprechend reduziert.

Der Ring kann auf Baumaß gepresst sein. Dies bedeutet, dass durch einen Pressvorgang der rund gebogene Draht die gewünschte Dicke erhält, die für seine Funktion entscheidend ist. Analog oder zusätzlich kann zumindest eine axiale Seitenfläche des Ringes geschliffen sein. Durch diesen Schleifprozess lassen sich Ausgleichsscheiben mit sehr guten Toleranzen herstellen.

Es sei darauf hingewiesen, dass Sicherungsringe oder Seegerringe, die zur axialen Lagesicherung eines Bauteils auf einer Welle oder Achse dienen, aus Runddraht gebogen sind. Ein derartiger Sicherungsring sitzt dabei üblicherweise in einer Nut, wobei es jedoch auf die genaue Dicke des Sicherungsringes nicht ankommt. Die Erfindung sieht nun vor, einen zu einem Ring gebogenen Draht nicht zur Lagesicherung, sondern zum Einstellen des axialen Spiels oder der axialen Vorspannung einer Welle in einem Getriebe einzusetzen. So kann das axiale Spiel der Welle zwischen zwei sich gegenüberstehenden Getriebewandungen oder zwischen einer Getriebewandung und einer anderen, koaxial angeordneten Welle oder einem anderen sich drehenden Teil eingestellt werden.

Anhand der in den Figuren dargestellten Ausführungsbeispiele wird die Erfindung näher erläutert. Es zeigen:
- Figur 1: schematisch Teile eines erfindungsgemäßen Getriebes; und
- Figur 2: Querschnitte eines Drahtes, der für eine Ausgleichsscheibe verwendet wird.

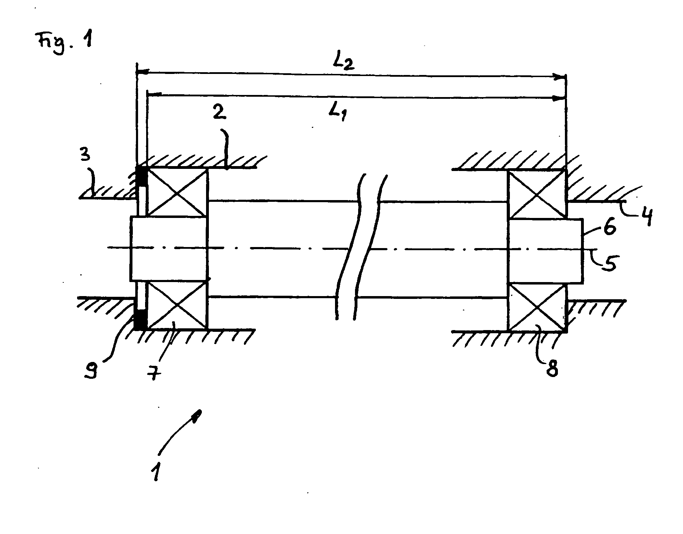

Figur 1 zeigt in schematischer Weise Teile eines Getriebes, das in seiner Gesamtheit mit 1 bezeichnet wird. Das Getriebe 1 umfasst ein Gehäuse 2, das eine Gehäusewandung 3 und eine Gehäusewandung 4 aufweist. In dem Gehäuse 2 ist drehbar um eine Drehachse 5 eine Welle 6 gelagert. Die Lagerung der Welle 6 erfolgt über ein erstes Lager 7 und über ein zweites Lager 8. Bei dem ersten Lager 7 und dem zweiten Lager 8 handelt es sich vorzugsweise um Schräglager, wie beispielsweise Kegelrollenlager.

Die Welle 6 kann eine Eingangswelle, eine Ausgangswelle oder eine Zwischenwelle des Getriebes 1 sein. Die Welle kann mehrere Losräder, Festräder, Zwischenräder und/oder Gangschaltkupplungen tragen, die jedoch in Figur 1 nicht dargestellt sind.

Durch eine Ausgleichsscheibe 9 wird das axiale Spiel bzw. die axiale Vorspannung der Welle 6 in axialer Richtung genau eingestellt. Die Ausgleichsscheibe 9 ist zwischen der Gehäusewandung 3 und dem ersten Lager 7 angeordnet. Durch die Ausgleichsscheibe 9 wird die Differenz einer Länge L₂ zu einer Länge L₁ ausgeglichen. Die Länge L₁ ist dabei das axiale Einbaumaß der Welle 6 mit den Lagern 7, 8. Die Länge L₂ wird durch die Geometrie des Gehäuses 2 vorgegeben. Aufgrund von Fertigungstoleranzen kann die Differenz der Längen L₂ und L₁ unterschiedlich groß ausfallen, so dass zur Einstellung eines axialen Spiels oder einer axialen Vorspannung in einer Serienfertigung unterschiedlich dicke Ausgleichsscheiben 9 zum Einsatz kommen können. Eine axiale Vorspannung der Welle 6 kann beispielsweise dann angezeigt sein, wenn das Gehäuse 2 aus Aluminium und die Welle 6 aus Stahl sind, wobei sich die Vorspannung auf das Getriebe 1 im kalten Zustand bezieht. Erreicht das Getriebe 1 im Betrieb seine Betriebstemperatur, erhöht sich aufgrund der unterschiedlichen Wärmeausdehnungskoeffizienten die Länge L₂ mehr als die Länge L₁ mit der Folge, dass die durch die Ausgleichsscheibe 9 eingestellte Vorspannung kleiner wird und in vielen Fällen idealerweise auf Null gesetzt wird, so dass die Welle 6 mit den Lagern 7, 8 in axialer Richtung spielfrei und spannungsfrei im Gehäuse 2 angeordnet ist.

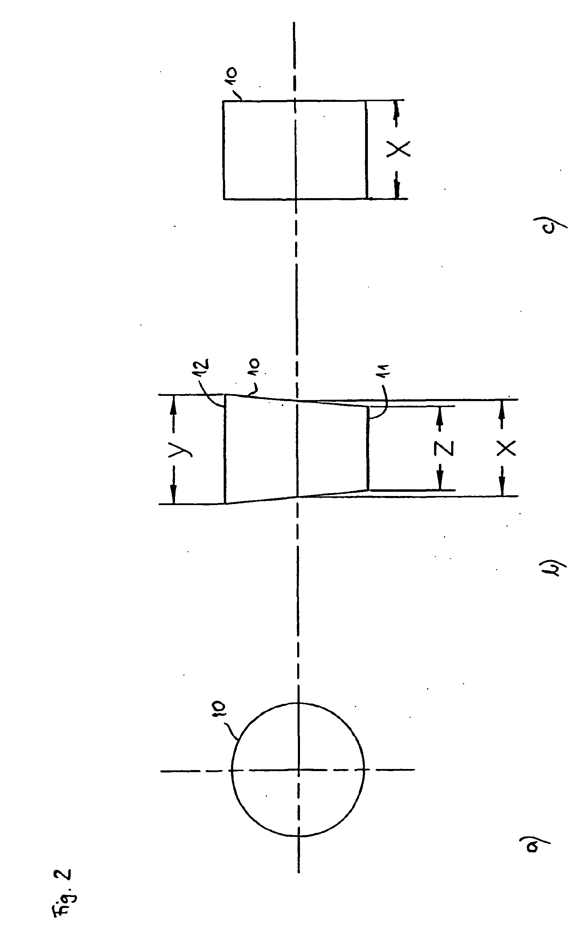

Figur 2 zeigt Querschnitte eines Drahtes 10, aus dem die Ausgleichsscheibe 9 gemäß Figur 1 hergestellt werden kann. Der Draht 10 soll dabei ein dünnes, langes Stück Metall sein, das sich zu einem Ring biegen lässt.

Figur 2a zeigt den Draht 10 mit einem kreisrunden Querschnitt. Durch einen Walzprozess lässt sich der kreisrunde Querschnitt gemäß Figur 2a in einen trapezförmigen Querschnitt umformen, wie er in Figur 2b dargestellt ist. Bei diesem Walzprozess wird vorzugsweise der Draht 10 gezogen, so dass die Querschnittsfläche des trapezförmigen Drahtes gemäß Figur 2b kleiner ist als die Querschnittsfläche des kreisrunden Querschnitts gemäß Figur 2a.

Ein mittleres Maß X des trapezförmigen Querschnitts steht für die spätere Dicke der Ausgleichsscheibe 9. Die Dickenmaße Z und Y, die die Länge einer kürzeren Kante 11 bzw. einer längeren Kante 12 kennzeichnen, sind abhängig von dem Durchmesser eines Ringes, der durch einen Biegeprozess des Drahtes gemäß Figur 2b entsteht. Durch das Rundbiegen und den dabei entstehenden Druckkräften bzw. Zugkräften im Material gleichen sich die Maße Z, Y dem mittleren Maß X an. So entsteht ein Ring mit einem rechteckigen Querschnitt, wie er in Figur 2c dargestellt ist. Die Breite des Querschnitts beträgt dabei X.

Beim Walzen des Drahtes 10 können zumindest eines der Maße X, Y, Z gemessen und geregelt werden. Um ein anderes Maß X zu erhalten, muss die beim Walzen bevorzugt eingesetzte Walzmaschine nicht umgebaut werden, sondern es müssen lediglich die Querwalzen nachgestellt werden.

Nach dem Biegen des Drahtes 10 zu einem Ring kann der Draht entsprechend abgeschnitten werden. Ein Schleifen ist in der Regel nicht mehr erforderlich.

Dadurch kann auch kein Grat, der beim Schleifen entstehen könnte, zu einer Änderung des axialen Baumaßes führen. Auch besteht keine Verletzungsgefahr durch den Grat bei der Handmontage.

### Bezugszeichenliste:

- 1: Getriebe
- 2: Gehäuse
- 3: Gehäusewandung
- 4: Gehäusewandung
- 5: Achse
- 6: Welle
- 7: erstes Lager
- 8: zweites Lager
- 9: Ausgleichsscheibe
- 10: Draht
- 11: kurze Kante
- 12: lange Kante
- X: Dicke
- Y: Dicke
- Z: Dicke
- L₁: Länge
- L₂: Länge

## Patentansprüche

1. Getriebe (1) mit einem Gehäuse (2), mit wenigstens einer drehbar in dem Gehäuse gelagerten Welle (6) und mit wenigstens einer Ausgleichsscheibe (9), durch die ein axiales Spiel oder eine axiale Vorspannung der Welle (6) in dem Gehäuse (2) einstellbar ist, **dadurch gekennzeichnet, dass** die Ausgleichsscheibe (9) aus einem einzigen zu einem Ring gebogenen Draht (10) aus Metall besteht und dass durch eine Dicke des Drahtes (10) das Maß der axialen Vorspannung oder des axialen Spiels festlegbar ist.

2. Getriebe (1) nach Anspruch 1, **dadurch gekennzeichnet, dass** der Ring einen rechteckigen oder im wesentlichen rechteckigen Ringquerschnitt aufweist.

3. Getriebe (1) nach Anspruch 1 oder 2, **dadurch gekennzeichnet, dass** der Ring einen nicht geschlossenen Umfang aufweist.

4. Getriebe (1) nach einem der Ansprüche 1 bis 3, **dadurch gekennzeichnet, dass** der Draht (10) gewalzt ist.

5. Getriebe (1) nach einem der Ansprüche 1 bis 4, **dadurch gekennzeichnet, dass** der Draht (10) gezogen ist.

6. Getriebe (1) nach einem der Ansprüche 1 bis 5, **dadurch gekennzeichnet, dass** der Ring gepresst ist.

7. Getriebe (1) nach einem der Ansprüche 1 bis 6, **dadurch gekennzeichnet, dass** zumindest eine Seitenfläche des Ringes geschliffen ist.

8. Verwendung eines zu einem Ring gebogenen Drahtes (10) als Ausgleichsscheibe (9) zum Einstellen eines axialen Spieles oder einer axialen Vorspannung einer Welle (6) in einem Gehäuse (2) eines Getriebes (1) nach Anspruch 1, in dem die Welle (6) drehbar gelagert ist, wobei unterschiedlich dicke Ausgleichsscheiben (9) eingesetzt werden, um Fertigungstoleranzen in einer Serienfertigung des Getriebes (1) auszugleichen.

## Claims

1. Gearbox (1) with a housing (2), with at least one shaft (6) mounted rotatably in the housing, and with at least one shim (9) by means of which an axial play or an axial prestress of the shaft (6) in the housing (2) is adjustable, **characterized in that** the shim (9) comprises a single metal wire (10) bent to form a ring, and **in that** the extent of the axial prestress or of the axial play is fixable by a thickness of the wire (10).

2. Gearbox (1) according to Claim 1, **characterized in that** the ring has a rectangular or substantially rectangular cross section.

3. Gearbox (1) according to Claim 1 or 2, **characterized in that** the ring has a circumference which is not closed.

4. Gearbox (1) according to one of Claims 1 to 3, **characterized in that** the wire (10) is rolled.

5. Gearbox (1) according to one of Claims 1 to 4, **characterized in that** the wire (10) is drawn.

6. Gearbox (1) according to one of Claims 1 to 5, **characterized in that** the ring is pressed.

7. Gearbox (1) according to one of Claims 1 to 6, **characterized in that** at least one side face of the ring is ground.

8. Use of a wire (10) bent to form a ring as a shim (9) for adjusting an axial play or an axial prestress of a shaft (6) in a housing (2) of a gearbox (1) according to Claim 1, in which the shaft (6) is mounted rotatably, wherein shims (9) of differing thickness are used in order to compensate for manufacturing tolerances in series production of the gearbox (1).

## Revendications

1. Boîte de vitesses (1) comprenant un boîtier (2), au moins un arbre (6) monté à rotation dans le boîtier et au moins une rondelle de compensation (9), qui permet d'ajuster un jeu axial ou une précontrainte axiale de l'arbre (6) dans le boîtier (2), **caractérisée en ce que** la rondelle de compensation (9) se compose d'un fil métallique (10) unique cintré en forme de bague, et **en ce que** la mesure de la précontrainte axiale ou du jeu axial peut être établie par une épaisseur du fil (10).

2. Boîte de vitesses (1) selon la revendication 1, **caractérisée en ce que** la bague présente une section transversale de bague rectangulaire ou essentiellement rectangulaire.

3. Boîte de vitesses (1) selon la revendication 1 ou 2, **caractérisée en ce que** la bague présente un pourtour non fermé.

4. Boîte de vitesses (1) selon l'une quelconque des revendications 1 à 3, **caractérisée en ce que** le fil (10) est laminé.

5. Boîte de vitesses (1) selon l'une quelconque des revendications 1 à 4, **caractérisé en ce que** le fil (10) est tréfilé.

6. Boîte de vitesses (1) selon l'une quelconque des revendications 1 à 5, **caractérisée en ce que** la bague est pressée.

7. Boîte de vitesses (1) selon l'une quelconque des revendications 1 à 6, **caractérisée en ce qu'**au moins une surface latérale de la bague est meulée.

8. Utilisation d'un fil (10) cintré en forme de bague en tant que rondelle de compensation (9) pour l'ajustement d'un jeu axial ou d'une précontrainte axiale d'un arbre (6) dans un boîtier (2) d'une boîte de vitesses (1) selon la revendication 1, dans lequel l'arbre (6) est monté à rotation, des rondelles de compensation (9) d'épaisseurs différentes étant utilisées afin de compenser des tolérances de fabrication dans une fabrication en série de la boîte de vitesses (1).
